# EUROPÄISCHE PATENTSCHRIFT

(11) **EP 2 497 879 B1**
(45) Veröffentlichungstag und Bekanntmachung des Hinweises auf die Patenterteilung: **15.11.2017**
(21) Anmeldenummer: 12001538.3
(22) Anmeldetag: 07.03.2012
(51) Int. Cl.: E04H 13/00, F16B 3/06, F16B 13/06, F16B 13/12, F16B 37/12

(54) **Befestigung einer Monumentplatte auf einem Fundament**
Fixing of a monument board to a foundation
Fixation d'une plaque de monument sur une fondation

(30) Priorität: 08.03.2011 DE 202011003689 U; 20.12.2011 DE 202011109275 U
(43) Veröffentlichungstag der Anmeldung: 12.09.2012
(73) Patentinhaber: Eckardt, Olaf, 99510 Apolda (DE)
(72) Erfinder: Eckardt, Olaf, 99510 Apolda (DE)
(74) Vertreter: Callies, Rainer Michael

(56) Entgegenhaltungen:
- DE-A1- 3 915 670
- DE-U1- 29 917 839
- GB-A- 2 280 689

## Beschreibung

Die Erfindung betrifft eine Befestigung, die zum Befestigen einer Monumentplatte auf einem Fundament und/oder Sockel vorgesehen ist, nach dem Oberbegriff des Anspruchs 1. Bei der Monumentplatte kann es sich insbesondere um einen Grabstein handeln. Die Befestigung ist in ihrer Verwendung jedoch nicht beschränkt auf den genannten Verwendungszweck, sondern kann durchaus auch zur Verbindung von zwei anderen Teilen benutzt werden.
Monumentplatten, insbesondere Grabsteine, werden in der Regel zweiteilig hergestellt und bestehen aus einem Sockel, welcher auf einem Fundament aufgesetzt ist und einer darauf aufgesetzten Monumentplatte oder Grabstein, die im allgemeinen eine geringere Aufstandsfläche aufweisen, als der Sockel, der mit dem Fundament fest verbunden ist.
Obwohl die Aufstandsfläche der Monumentplatte oder des Grabsteins an die Oberfläche derselben angepasst ist und die beiden Teile miteinander durch eingebrachten Mörtel oder Kleber verbunden sind, besteht die Gefahr, dass die Monumentplatte oder der Grabstein bei Rüttelproben, die in regelmäßigen Abständen vorgeschrieben sind oder auch bei anderen Krafteinwirkungen, wie beispielsweise bei Vandalismus, aus welchen Gründen auch immer nicht mehr eine ausreichende Standfestigkeit aufweist und umstürzt. Um diesem Umstürzen zu begegnen, sind verschiedene Befestigungssysteme von Monumentplatten oder Grabsteinen bekannt.

So ist aus der DE 299 17 839U1 eine Grabmalbefestigungsvorrichtung bekannt, bei der ein Bolzen, der in einer Bohrung des Grabsockels verankert ist, einen in der Montageposition aus dem Grabsockel hervorstehenden Stehbolzen aufweist, wobei in der Montageposition des Grabmals der Stehbolzen in einer Hülse aufgenommen ist, die in einer Bohrung des Grabsteins verankert ist. Auf diese Weise ist zwar der Grabstein sehr einfach durch Aufstecken der Hülse auf den Stehbolzen am Grobsockel festlegbar, jedoch bildet diese Verbindung in der Regel keine spielfreie Verbindung aus. Das kleinste Spiel in dieser Steckverbindung kann aber infolge der Krafteinwirkung bei Rüttelproben aber auch bei möglichem Vandalismus, die meistens an der Oberkante des Grabsteines auf den Grabstein ausgeübt wird und damit einen großen Hebelarm gegenüber der Steckverbindung aufweist, dazu führen, dass sich der Grabstein lockert bzw. das konstruktionsbedingte Montagespiel der Bolzenverbindung sichtbar wird und der Grabstein damit nicht mehr über die geforderte Standfestigkeit verfügt, so dass ein Umstürzen nicht mehr ausgeschlossen werden kann, was unter Umständen zu einer ernstzunehmenden Gefahrenquelle führen kann.

Aus der DE 10 2004 014 905 B3 ist eine kipp- und drehsichere Monumentbefestigung bekannt, bei der im Mittelbereich in der Aufsitzfläche des Monuments eine Sackbohrung zur Aufnahme und Befestigung einer Hülse mit geschlossenem Hülsenboden vorgesehen ist, wobei die Hülse der passgenauen lösbaren Aufnahme eines ersten Bolzenteilabschnitts dient, der Bestandteil des Bolzens ist, der mit seinem zweiten Bolzenabschnitt in einer Bohrung des Sockels befestigt ist, wobei sowohl die Hülse als auch der Mittelabschnitt des Bolzens jeweils mit einem die Bohrungen überdeckenden Kragen versehen sind und außerhalb des Anordnungsbereichs des Bolzens der Anker vorgesehen ist, der den Sockel mit dem Fundament verbinden lässt, wobei die monumentseitige Ankerbefestigung über das Sockelniveau erhaben ausgeführt ist und in eine zusätzlich vorgesehene korrespondierende Ausnehmung des Monuments eingreift. Der Nachteil dieser Montagebefestigung ist einerseits, dass die Teile der Montagebefestigung kostenaufwändig und passgenau hergestellt und bei der Montage auch passgenau im Fundament und der Monumentplatte eingesetzt werden müssen. Andererseits wird aber auch mit dieser Montagebefestigung der bereits bei der DE 299 17 839 beschriebene Nachteil nicht vermieden, dass bereits das kleinste Montagespiel zu einem Lockern der Monumentplatte führen kann. Zusätzlich ist immer eine Verdrehsicherung erforderlich.

Aus der DE 39 15 683 A1, der DE 39 15 665 A1, der DE 199 42 237 A1 sind weitere Verankerungen bzw. Befestigungen von Grabsteinen bekannt. Diese Verankerungen bzw. Befestigungen schließen aber die bereits beschriebenen Nachteile in dem vorstehend genannten Stand der Technik nicht aus.

Eine gattungsgemäße Befestigung ist aus der DE 73 15 772 U bekannt. Diese ist jedoch nur für Beschriftungsträger in Leichtbauweise aus Kunststoff vorgesehen.

Eine weitere gattungsgemäße Befestigung ist in der DE 88 05 372 U1 beschrieben. Diese basiert auf einem Schiebe- und Einrastvorgang in der horizontalen Ebene, wodurch sie in der Konstruktion relativ aufwändig und in der praktischen Anwendung relativ anspruchsvoll ist.

Aufgabe der vorliegenden Erfindung ist es daher, eine Befestigung für eine Monumentplatte der eingangs genannten Art dahingehend zu verbessern, dass eine sehr kostengünstige und einfache Herstellung und eine einfache und dauerhaft standfeste Montage der Monumentplatte auch von ungelerntem Personal möglich ist.

Die Aufgabe wird erfindungsgemäß durch die Merkmale des Anspruchs 1 gelöst. Die Befestigung einer Monumentplatte auf einem Fundament und/oder Sockel arretiert sich beim Aufsetzen der Monumentplatte selbst und bildet nach dem Aufsetzen der Monumentplatte eine formschlüssige Verbindung mit dem Fundament und/oder Sockel aus. Die Befestigung besteht im Wesentlichen aus einem Außenkonus und einem Innenkonus, die passgenau ineinander steckbar sind. Eine derartige Befestigung für die Monumentplatte ist sehr kostengünstig und ohne eine hohe Passgenauigkeit der zu verbindenden Teile der Befestigung herstellbar und gewährleistet eine äußerst einfache und schnelle und durch den sich ausbildenden Formschluss nach dem Aufsetzen eine spielfreie Montage und damit eine dauerhafte stabile Standfestigkeit der Monumentplatte auf dem Fundament und/oder Sockel. Denn die Verbindung mittels Innen- und Außenkonus garantiert eine spielfreie Weiterleitung der Kräfte bei axialer Belastung. Darüber hinaus wird durch das hohe Eigengewicht der Monumentplatte in Verbindung mit dem sich ausgebildeten Formschluss und Reibschluss einer Verdrehung der Monumentplatte ohne weitere Hilfsmittel entgegengewirkt. Aber auch das Abnehmen und eine nachfolgende Wiedermontage der Monumentplatte, beispielsweise zum Nachsetzen von Namen bei einer Doppel- oder Mehrfachbelegung einer Grabstelle, ist problemlos und absolut zerstörungsfrei und mit geringstem Zeitaufwand möglich, da die Befestigung mit den gleichen Kräften gelöst werden kann, die für die Montage zum Setzen der Monumentplatte notwendig sind. Die Bezeichnungen Innenkonus und Außenkonus schließen erfindungsgemäß auch einen Innenkegel und einen Außenkegel bzw. eine Innenpyramide und eine Außenpyramide ein, wobei jedoch die Kegel bzw. Pyramiden keine Spitze haben müssen, sondern insbesondere ein flaches oder abgeplattetes entsprechendes Ende aufweisen können, es sich also auch um einen Kegelstumpf bzw. Pyramidenstumpf handeln kann.

Eine in dieser Weise ausgebildete Befestigung kann mit einem sehr geringen Fertigungsaufwand und auch mit einem geringen Materialeinsatz, beispielsweise als gezogene oder gepresste Teile oder mit einem Gussverfahren ohne weitere Nachbearbeitung der formschlüssig korrespondierenden Flächen, hergestellt werden. Durch Ausbildung der zusammenwirkenden Flächen der Befestigung als Innen- und Außenkonus und der damit verbundenen Selbstarretierung der Befestigung ist auch die Montage der Monumentplatte sehr vereinfacht und zeitsparend durchführbar. Die oben im Zusammmenhang mit dem Stand der Technik beschriebenen konstruktionsbedingten Montagespiele sind bei der Erfindung ausgeschlossen.

Bevorzugt ist vorgesehen, dass im angebrachten Zustand der Befestigung der Außenkonus auf dem Fundament und/oder dem Sockel lösbar oder unlösbar festgelegt ist und der Innenkonus in der Monumentplatte ausgebildet ist. Auf diese Weise ist dem Eindringen von Feuchtigkeit zwischen Außen- und Innenkonus entgegengewirkt und so eine gute Witterungsbeständigkeit der Befestigung gegeben. Alternativ wäre es aber auch möglich, vorzusehen, dass der Außenkonus an der Monumentplatte lösbar oder unlösbar festgelegt ist und der Innenkonus in dem Fundament und/oder Sockel ausgebildet ist.

Nach einer anderen weiteren vorteilhaften Ausgestaltung der Erfindung kann die Oberfläche des Außenkonus und des Innenkonus vielflächig ausgebildet sein, insbesondere die Form einer Pyramide bzw. eines Pyramidenstumpfes aufweisen. Auf diese Weise wird mit den beiden zusammenwirkenden und verbindenden Teilen der Befestigung gleichzeitig eine zusätzliche Sicherung gegen das Verdrehen der Monumentplatte in der Befestigung ausgebildet.

Nach einer weiteren vorteilhaften Ausgestaltung der Erfindung ist im Fundament und/oder Sockel oder in der Monumentplatte eine Bohrung eingebracht, in der ein mit dem Außenkonus verbundener Bolzen oder Dübel verankert ist. Bevorzugt ist der Bolzen oder Dübel im Fundament und/oder Sockel oder in der Monumentplatte einzementiert, geklebt oder gespreizt festgelegt. Durch diese Maßnahme ist ein einfaches und stabiles Befestigen des Außenkonus auf dem Fundament und/oder Sockel oder in der Monumentplatte gegeben.

Vorteilhaft kann sein, wenn der Bolzen als Gewindebolzen ausgebildet ist, der in eine Gewindehülse eingeschraubt ist, die in der Bohrung im Fundament und/oder Sockel oder in der Monumentplatte einzementiert oder fest verankert ist.

Nach einer weiteren vorteilhaften Ausgestaltung der Erfindung ist der Außenkonus am an das Fundament und/oder den Sockel angrenzenden Ende mit einer Gewindebohrung ausgebildet, in die ein sich mindestens über das Fundament und/oder den Sockel oder die Monumentplatte erstreckender Gewindeabschnitt des Bolzens eingeschraubt werden kann bzw. in angebrachtem Zustand der Befestigung eingeschraubt ist. Auf diese Weise ist die Voraussetzung gegeben, dass der Außenkonus erst vor Ort montiert werden kann und der Transport und die Handhabung der Monumentplatte und des Sockels bis zur Montage problemlos erfolgen kann, ohne dass zu befürchten ist, dass es durch den von der Monumentplatte oder dem Sockel abstehenden Außenkonus zu Beschädigungen an der Monumentplatte oder dem Sockel oder am Konus selbst kommen kann.

Vorteilhaft ist, wenn in diesem Fall auf der Oberfläche des Außenkonus eine oder mehrere Schlüsselflächen, Querbohrungen oder Nuten vorgesehen sind, als Mitnahmeflächen zur Aufnahme von Rotationskraft. Dadurch wird die Montage des Außenkonus sehr begünstigt und der Außenkonus kann auch mit einem ausreichenden Kraftmoment angezogen werden.

Der Außenkonus könnte aber auch auf eine andere Weise als mittels eines Bolzens oder Dübels zur Befestigung an dem Fundament bzw. Sockel oder wie gesagt der Monumentplatte vorgesehen sein. Wenn der Außenkonus an einem anderen Teil als einem Fundament, Sockel oder einer Monumentplatte eines Grabmals befestigt werden soll, könnte beispielsweise auch eine Schweißverbindung vorgesehen sein. Die axiale Lastweiterleitung erfolgt stets über das offene Ende des Außenkonus.

Vorzugsweise ist der Innenkonus in einem Formteil ausgebildet, dessen Oberfläche sich zu einem geschlossenen bzw. im Wesentlichen geschlossenen Ende hin verjüngt, wobei die Verjüngung kegelformartig bzw. konisch ist. Die Oberfläche dieses geschlossenen Endes kann flach bzw. abgeplattet sein. Dadurch ist es möglich, dass eine Bohrung, in die das Formteil eingesetzt werden soll, zwar eine gewisse Abweichung von einer gewünschten senkrechten Ausrichtung aufweisen kann, aber das Formteil dann dennoch die gewünschte senkrechte Ausrichtung bekommen kann, indem es nicht genau parallel in die Bohrung gesetzt wird. So kann die Bohrungstoleranz zur Senkrechten einer Setzfuge z. B. ca. +/- 5° bzw. 0,9 cm pro 10 cm Bohrungslänge betragen.

Nach einer weiteren vorteilhaften Ausgestaltung der Erfindung ist im angebrachten Zustand der Befestigung in einer Bohrung, die sich von der Unterseite der Monumentplatte in die Monumentplatte erstreckt oder die in das Fundament und/oder den Sockel eingebracht ist, das vorstehend beschriebene Formteil oder ein anders geformtes, mit dem Innenkonus ausgebildetes Formteil einzementiert oder eingeklebt, was zum Beispiel auch lediglich in radialer Richtung vorgesehen sein kann.

Bevorzugt ist dazu die Oberfläche des Formteils profiliert. Durch das Formteil mit dem Innenkonus wird sichergestellt, dass die Befestigung mit zusammenwirkenden Teilen ausgeführt werden kann, die eine feste und mindestens annähernd glatte Oberfläche aufweisen, um auf diese Weise einen stabilen Formschluss auszubilden. Durch die bevorzugte profilierte Oberfläche des Formteils, welches auch als Hülse bezeichnet werden kann, ist auch gewährleistet, dass nach dem Einzementieren oder Einkleben ein dauerhafter sicherer Sitz der Hülse erreicht wird.

Vorzugsweise weist das Formteil an einem offenen Ende einen Lastverteilungsflansch auf, der auch als Justierflansch bezeichnet werden kann. Ein solcher Justierflansch ist insbesondere vorteilhaft, wenn das Formteil die beschriebene konische Außenfläche aufweist. Denn durch den Justierflansch ist die senkrechte Ausrichtung des Formteils, und damit auch des zu befestigenden Grabsteins, auch dann sicher bewirkt, wenn die Bohrung nicht ganz senkrecht ausgerichtet ist. Dies ist deshalb der Fall, weil das Formteil, welches auch als Konushülse bezeichnet werden kann, sich mit dem Justierflansch beim Einbringen in einen Grabstein selbst ausrichtet. Es bildet sich eine Art Anschlag.

Es kann auch vorgesehen sein, dass der Innenkonus durch eine Bohrung in der Monumentplatte gegeben ist. Dies bedeutet, dass die Bohrung die Form des Innenkonus aufweist und somit passgenau der Innenkonus auf den Außenkonus gesteckt werden kann. Ein Formteil, wie es oben beschrieben ist, wäre dann nicht erforderlich.

Es bietet sich vorzugsweise weiter an, dass die Befestigung am Außenkonus einen Lastverteilungsflansch aufweist, der sich bei Anbringung der Befestigung zwischen der Unterseite des Außenkonus und dem Fundament und/oder Sockel befindet. Auf diese Weise wird die auf den Außenkegel wirkende Kraft der Monumentplatte auf einen breiteren Abschnitt des Fundaments und/oder des Sockels übertragen.

Es hat sich ebenfalls als vorteilhaft erwiesen, wenn die Fuge zwischen Monumentplatte und Fundament und/oder Sockel mit Mörtel, Kleb- oder Dichtstoff verschlossen ist. Anschließend kann die Fuge zwischen Monumentplatte und Fundament und/oder Sockel nach dem Vermörteln bzw. Versehen mit Kleb- oder Dichtstoff mit einem elastischen Fugenmittel isoliert worden sein. Als bevorzugtes Fugenmittel hat sich dabei ein Silikon, Polyurethan oder Triochol erwiesen. Es ist auch vorteilhaft, wenn das elastische Fugenmittel mit einer Füllschnur hinterlegt ist. Auf diese Weise kann die Fuge zwischen der Monumentplatte und dem Fundament und/oder Sockel und damit auch die vorzugsweise metallische Befestigung dauerhaft gegen Umwelteinflüsse, insbesondere gegen eindringendes Wasser und Feuchtigkeit geschützt werden, was zum einen mit der Zeit zur Zerstörung der Befestigungsmittel, insbesondere der eingesetzten und verbindenden Mörtelbestandteile, und damit zur Instabilität der Monumentplatte führen könnte.

Ferner kann das Formteil an seinem ansonsten geschlossenen Ende eine Bohrung aufweisen, welche hier auch als Entlastungsbohrung bezeichnet wird und zu einem Entlüften dient und/oder zu einem nachträglichen Verkleben, also einem Einbringen des Klebstoffs bzw. Mörtels nach Einsetzen des Formteils in die für dieses vorgesehene Bohrung. Die Entlastungsbohrung kann durch einen Stopfen, z. B. aus Kunststoff, verschließbar sein.

Weitere Einzelheiten der Erfindung ergeben sich aus der nachfolgenden ausführlichen Beschreibung und den beigefügten Zeichnungen, in denen bevorzugte Ausführungsformen der Erfindung veranschaulicht sind. Es zeigen:
Fig. 1 einen Schnitt durch eine montierte Monumentplatte auf einem Sockel mit einer erfindungsgemäßen Befestigung gemäß einer ersten Ausführungsform, und
Fig. 2 einen Schnitt durch eine montierte Monumentplatte auf einem Sockel mit einer erfindungsgemäßen Befestigung gemäß einer zweiten Ausführungsform.

In den Figuren sind gleiche Teile mit gleichen Bezugszahlen versehen.

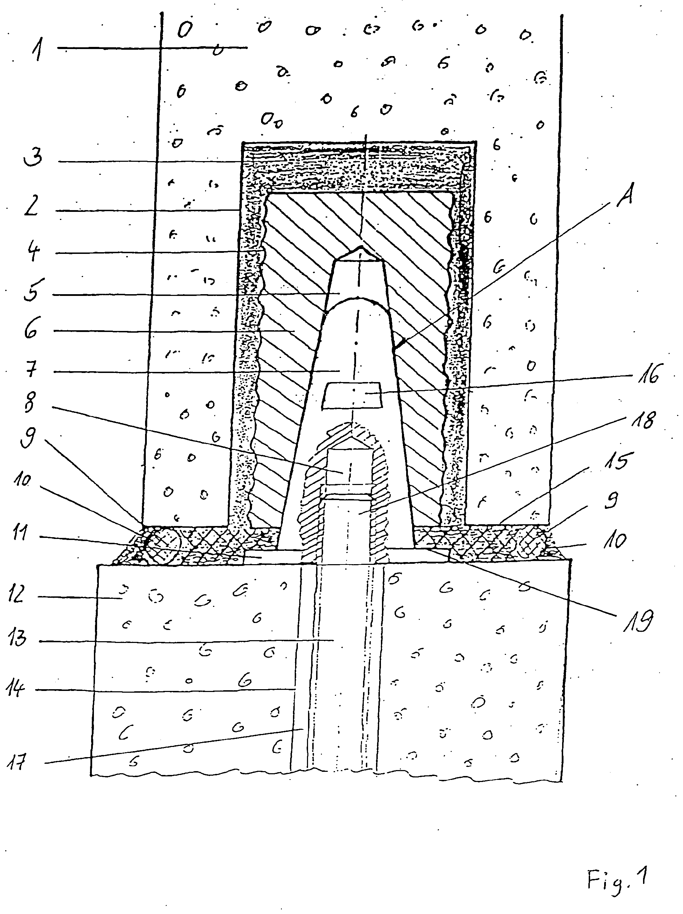

Zunächst wird auf Fig. 1 Bezug genommen. Die erfindungsgemäße Befestigung A besteht bei der gezeigten Ausführungsform im Wesentlichen aus einem Innenkonus 5, der bei dieser Ausführungsform in einem Formteil 6 ausgebildet ist, das in einer Bohrung 2 der Monumentplatte 1 eingesetzt ist, und einem Außenkonus 7, der bei dieser Ausführungsform auf einem Gewindeabschnitt 18 des Bolzens 13 aufgeschraubt ist, der in einer Bohrung 14 festgelegt ist, die im Fundament und/oder Sockel 12 eingebracht ist.

Wie in Fig. 1 gezeigt ist, ist im Fundament und/oder Sockel 12 eine Bohrung 14 eingebracht, in der eine Hülse 17 mit einem Innengewinde einzementiert oder eingeklebt ist, die bündig mit der Oberkante des Fundaments und/oder Sockels 12 abschließt. Die Oberfläche der Gewindehülse 17 ist dabei bevorzugt, aber nicht in der Zeichnung gezeigt, profiliert, damit die Gewindehülse 17 in der Bohrung 14 lagestabil befestigt ist.

In der Gewindehülse 17 ist ein Bolzen/Dübel 13 eingesetzt, der bevorzugt bei dieser gezeigten Ausführungsform als Gewindebolzen ausgebildet und in der Gewindehülse 17 soweit eingeschraubt ist, dass sich ein ausreichend langer Gewindeabschnitt über die Oberkante des Fundaments und/oder Sockels 12 erstreckt, um den Außenkonus 7 stabil zu befestigen.

Es versteht sich aber auch von selbst, dass anstelle der Gewindehülse 17 aber auch ein Bolzen/Dübel 13, der im oberen Abschnitt mit einem Gewindeabschnitt 18 versehen ist, der sich über die Oberkante des Fundaments und/oder Sockels 12 erstreckt, direkt in der Bohrung 14 einzementiert oder eingeklebt werden kann.

Im Außenkonus 7 ist ausgehend vom an das Fundament und/oder den Sockel 12 angrenzenden Ende eine Bohrung 8 eingebracht, die in der gezeigten Ausführungsform als Gewindebohrung mit einem Gewinde ausgebildet ist, das mit dem Gewindeabschnitt 18 des Bolzens/Dübels 13 korrespondiert und mit dem der Außenkonus 7 auf dem Gewindeabschnitt 18 des Bolzens/Dübels, der im Fundament und/oder Sockel 12 festgelegt ist, befestigt wird. Zur Montageerleichterung ist die Oberfläche des Außenkonus 7 bevorzugt im mittleren Bereich mit einer Schlüsselfläche 16 versehen, wobei stattdessen aber auch Querbohrungen oder Nuten vorgesehen sein können.

Zur besseren Lastverteilung auf dem Fundament und/oder Sockel 12 kann zwischen den angrenzenden Flächen des Außenkonus 7 und des Fundaments und/oder Sockels 12 bevorzugt ein vergrößerter Flansch 11 eingefügt werden, was sich auch sehr vorteilhaft beim Befestigen des Außenkonus 7 erwiesen hat, da das auftretende Drehmoment beim Befestigen des Außenkonus 7 nicht direkt auf das Fundament und/oder Sockel 12 wirkt und damit keine Beschädigungen am Fundament und/oder Sockel in Folge des wirkenden Drehmoments auftreten.

In der Monumentplatte 1 selbst ist ausgehend von der Aufstandsfläche der Monumentplatte 1 die Bohrung 2 eingebracht, mit einer Abmessung, die geeignet ist, das Formteil 6 mit einer Hohlraumfüllung 3, beispielsweise einer Mörtelmischung, in der Monumentplatte 1 bündig zur Aufstandsfläche der Monumentplatte 1 festzulegen.

Das Formteil 6 ist am Außendurchmesser bevorzugt mit einer Profilierung 4 ausgebildet, um einen lagestabilen Sitz des Formteils 6 in der Monumentplatte 1 zu gewährleisten.

Ausgehend von der Aufstandsfläche der Monumentplatte 1 ist das in der Monumentplatte 1 eingesetzte Formteil 6 mit dem Innenkonus 5 ausgebildet, der bevorzugt mittig liegt und der eine Kontur und Abmessung aufweist, die nach der Montage der Monumentplatte 1 mit dem im Fundament und/oder Sockel 12 festgelegten Außenkonus 7 eine formschlüssige Verbindung ausbildet.

In der Montageposition ist die Fuge 10 zwischen der Monumentplatte 1 und dem Fundament und/oder Sockel 12 mit einer Mörtelschicht 15 befüllt und wird nach dem Vermörteln mit einem elastischen Fugenmittel, wie Silikon oder Polyurethan oder Triochol verschlossen, wobei bevorzugt vorher vor dem Verschließen der Fuge das Fugenmittel mit einer Füllschnur 9 hinterlegt wird.

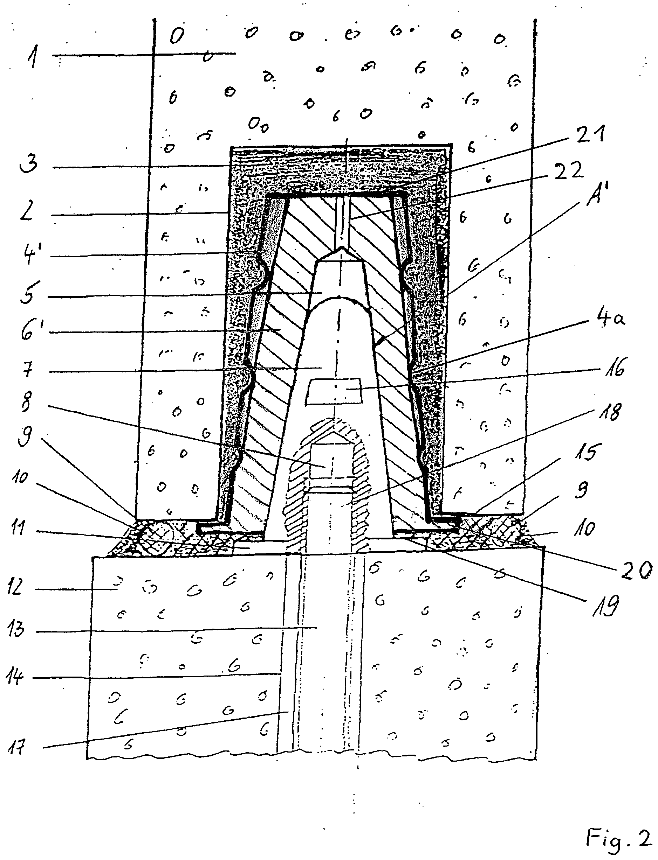

Es wird nun auf Fig. 2 Bezug genommen. Die Befestigung dieser zweiten Ausführungsform ist mit A' bezeichnet und unterscheidet sich von der Befestigung A, bei der das Formteil 6 im Längsschnitt eine rechteckige Außenkontur besitzt, folgendermaßen: Die Befestigung A' weist ein Formteil 6' auf, dessen Oberfläche sich zu einem im Wesentlichen geschlossenen, flachen Ende 21 hin verjüngt. Diese kegelformartige Außenform des Formteils 6' sorgt wie oben beschrieben für die Möglichkeit eines Ausgleichs im Rahmen einer Toleranz der Bohrung 2 zur Senkrechten der Fuge 10.

Ferner weist das Formteil 6' einen Justierflansch 20 auf. Dieser sorgt dafür, dass das Formteil 6' auch dann senkrecht zur Fuge 10 steht, wenn die Bohrung 2 von dieser Senkrechten abweichen sollte.

Zudem besitzt das Formteil 6' eine Profilierung 4', die von der Profilierung 4 abweicht, indem sie mehrere - hier drei - über den Formteilumfang verlaufende Rillen 4a aufweist. Die Rillen 4a können durch rechtwinklig zu ihnen verlaufende weitere Rillen (nicht gezeigt) unterbrochen sein. Eine solche Profilierung erlaubt eine besonders wirksame Verhakung des Mörtels bzw. Klebstoffs in radialer und axialer Richtung des Formteils 6', denn die Rillen wirken als Mörtel- bzw. Klebstofftaschen.

Ferner weist das Formteil 6' eine Bohrung 22 auf. Diese dient zum Entlüften und zu einem nachträglichen Verkleben, also einem Einbringen des Klebstoffs bzw. Mörtels nach Einsetzen des Formteils 6' in die Bohrung 2. Auch bei dem Formteil 6 der ersten Ausführungsform kann eine solche Entlastungsbohrung vorgesehen sein. Die Entlastungsbohrung 22 kann durch einen Stopfen (nicht gezeigt) verschließbar sein.

### Bezugszeichenliste

- A, A': Befestigung
- 1: Monumentplatte
- 2: Bohrung
- 3: Hohlraumfüllung
- 4, 4': Profilierung Formteil
- 4a: Rillen
- 5: Innenkonus
- 6, 6': Formteil
- 7: Außenkonus
- 8: Gewindebohrung
- 9: Füllschnur
- 10: Fuge
- 11: Flansch
- 12: Fundament/Sockel
- 13: Bolzen/Dübel
- 14: Bohrung
- 15: Mörtelschicht
- 16: Schlüsselfläche
- 17: Gewindehülse
- 18: Gewindeabschnitt
- 19: Unterseite Außenkonus
- 20: Justierflansch
- 21: geschlossenes Ende Formteil
- 22: Bohrung Formteil

## Patentansprüche

1. Befestigung zum Befestigen einer Monumentplatte (1) auf einem Fundament und/oder Sockel (12), insbesondere eines Grabsteins, wobei die Befestigung (A;A') eine beim Aufsetzen der Monumentplatte (1) sich selbst arretierende Befestigung (A;A') ist, die nach dem Aufsetzen der Monumentplatte (1) eine formschlüssige Verbindung mit dem Fundament und/oder Sockel (12) ausbildet,
**dadurch gekennzeichnet, dass** die Befestigung (A;A') aus einem Außenkonus (7) und einem Innenkonus (5) besteht, die passgenau steckbar sind.

2. Befestigung nach Anspruch 1,
**dadurch gekennzeichnet, dass** der Außenkonus (7) auf dem Fundament und/oder Sockel (12) lösbar oder unlösbar festgelegt ist und der Innenkonus (5) in der Monumentplatte (1) ausgebildet ist.

3. Befestigung nach Anspruch 1 oder 2,
**dadurch gekennzeichnet, dass** die Oberfläche des Außenkonus (7) und des Innenkonus (5) vielflächig ausgebildet ist.

4. Befestigung nach einem der Ansprüche 1 bis 3,
**dadurch gekennzeichnet, dass** im Fundament und/oder Sockel (12) oder in der Monumentplatte (1) eine Bohrung (14) eingebracht ist, in der ein mit dem Außenkonus (7) verbundener Bolzen oder Dübel (13) verankert ist.

5. Befestigung nach Anspruch 4,
**dadurch gekennzeichnet, dass** der Bolzen oder Dübel (13) im Fundament und/oder Sockel (12) oder in der Monumentplatte (1) einzementiert, geklebt oder gespreizt festgelegt ist.

6. Befestigung nach Anspruch 4,
**dadurch gekennzeichnet, dass** der Bolzen (13) als Gewindebolzen ausgebildet ist, der in eine Gewindehülse (17) eingeschraubt ist, die in der Bohrung (14) im Fundament und/oder Sockel (12) oder in der Monumentplatte (1) einzementiert oder fest verankert ist.

7. Befestigung nach einem der Ansprüche 1 bis 6,
**dadurch gekennzeichnet, dass** der Außenkonus (7) am an das Fundament und/oder den Sockel (12) angrenzenden Ende mit einer Gewindebohrung (8) ausgebildet ist, die zum Einschrauben eines sich mindestens über das Fundament und/oder den Sockel (12) oder die Monumentplatte (1) erstreckenden Gewindeabschnitts (18) des Bolzens (13) dient.

8. Befestigung nach Anspruch 7,
**dadurch gekennzeichnet, dass** auf der Oberfläche des Außenkonus (7) eine Schlüsselfläche (16), Querbohrung oder Nute vorgesehen ist.

9. Befestigung nach einem der Ansprüche 1 bis 8,
**dadurch gekennzeichnet, dass** ein Formteil (6') mit dem Innenkonus (5) ausgebildet ist und das Formteil (6') eine sich zu einem zumindest im Wesentlichen geschlossenen Ende (21) hin kegelformartig verjüngende Oberfläche aufweist.

10. Befestigung nach einem der Ansprüche 1 bis 9,
**dadurch gekennzeichnet, dass** in eine Bohrung (2), die sich von der Unterseite der Monumentplatte (1) in die Monumentplatte (1) erstreckt oder die in das Fundament und/oder den Sockel (12) eingebracht ist, ein mit dem Innenkonus (5) ausgebildetes bzw. das mit dem Innenkonus (5) ausgebildete Formteil (6;6') einzementiert oder eingeklebt ist.

11. Befestigung nach Anspruch 9 oder 10,
**dadurch gekennzeichnet, dass** die Oberfläche des Formteils (6;6') profiliert (4;4') ist.

12. Befestigung nach einem der Ansprüche 9 bis 11,
**dadurch gekennzeichnet, dass** das Formteil (6') an einem offenen Ende einen Justierflansch (20) aufweist.

13. Befestigung nach einem der Ansprüche 1 bis 8,
**dadurch gekennzeichnet, dass** der Innenkonus als Bohrung in der Monumentplatte (1) gegeben ist.

14. Befestigung nach einem der Ansprüche 1 bis 13,
**dadurch gekennzeichnet, dass** zwischen der Unterseite des Außenkonus (19) und dem Fundament und/oder Sockel (12) ein Lastverteilungsflansch (11) vorgesehen ist.

15. Befestigung nach einem der Ansprüche 1 bis 14,
**dadurch gekennzeichnet, dass** die Fuge (10) zwischen Monumentplatte (1) und Fundament und/oder Sockel (12) mit Mörtel, Kleb- oder Dichtstoff verschlossen ist.

## Claims

1. Fastening for fastening a monument slab (1) on a foundation and/or base (12), in particular for fastening a gravestone, wherein the fastening (A; A') is a fastening (A; A') which has a self-arresting function when the monument slab (1) is placed in position and, once the monument slab (1) has been placed in position, establishes a form-fitting connection to the foundation and/or base (12),
**characterized in that** the fastening (A; A') comprises an external cone (7) and an internal cone (5), which can be plugged together in an accurately fitting manner.

2. Fastening according to Claim 1,
**characterized in that** the external cone (7) is secured in a releasable or non-releasable manner on the foundation and/or base (12) and the internal cone (5) is formed in the monument slab (1).

3. Fastening according to Claim 1 or 2,
**characterized in that** the surface of the external cone (7) and of the internal cone (5) is of polygonal design.

4. Fastening according to one of Claims 1 to 3,
**characterized in that** the foundation and/or base (12) or the monument slab (1) contain/contains a bore (14), in which is anchored a bolt or fastener plug (13) which is connected to the external cone (7).

5. Fastening according to Claim 4,
**characterized in that** the bolt or fastener plug (13) is secured in the foundation and/or base (12) or in the monument slab (1) by being cemented,
adhesively bonded or expanded.

6. Fastening according to Claim 4,
**characterized in that** the bolt (13) is designed in the form of a threaded bolt which is screwed into a threaded sleeve (17), which is cemented, or anchored firmly, in the bore (14) in the foundation and/or base (12) or in the monument slab (1).

7. Fastening according to one of Claims 1 to 6,
**characterized in that**, at the end adjacent to the foundation and/or the base (12), the external cone (7) is formed with a threaded bore (8), into which is screwed a threaded portion (18) of the bolt (13), said threaded portion extending at least beyond the foundation and/or the base (12) or the monument slab (1).

8. Fastening according to Claim 7,
**characterized in that** an engagement aperture (16), transverse bore or groove is provided on the surface of the external cone (7).

9. Fastening according to one of Claims 1 to 8,
**characterized in that** a moulding (6') is formed with the internal cone (5), and the moulding (6') has a surface which tapers conically in the direction of an at least essentially closed end (21).

10. Fastening according to one of Claims 1 to 9,
**characterized in that** a or the moulding (6; 6') formed with the internal cone (5) is cemented or adhesively bonded into a bore (2) which extends into the monument slab (1) from the underside of the monument slab (1) or which is introduced into the foundation and/or the base (12).

11. Fastening according to Claim 9 or 10,
**characterized in that** the surface of the moulding (6; 6') is profiled (4; 4').

12. Fastening according to one of Claims 9 to 11,
**characterized in that** the moulding (6') has an adjustment flange (20) at an open end.

13. Fastening according to one of Claims 1 to 8,
**characterized in that** the internal cone is provided in the form of a bore in the monument slab (1).

14. Fastening according to one of Claims 1 to 13,
**characterized in that** a load-distributing flange (11) is provided between the underside of the external cone (19) and the foundation and/or base (12).

15. Fastening according to one of Claims 1 to 14,
**characterized in that** the joint (10) between the monument slab (1) and foundation and/or base (12) is closed off using mortar, adhesive or sealant.

## Revendications

1. Fixation pour la fixation d'une plaque de monument (1) sur une fondation et/ou un socle (12), en particulier d'une pierre tombale, la fixation (A ; A') étant une fixation (A ; A') autobloquante lors de la pose de la plaque de monument (1), qui, après la pose de la plaque de monument (1), constitue une liaison par engagement par correspondance de formes avec la fondation et/ou le socle (12),
**caractérisée en ce que** la fixation (A ; A') se compose d'un cône extérieur (7) et d'un cône intérieur (5) qui peuvent être enfichés avec ajustement exact.

2. Fixation selon la revendication 1,
**caractérisée en ce que** le cône extérieur (7) est fixé de manière détachable ou non détachable sur la fondation et/ou le socle (12) et le cône intérieur (5) est réalisé dans la plaque de monument (1).

3. Fixation selon la revendication 1 ou 2,
**caractérisée en ce que** la surface du cône extérieur (7) et du cône intérieur (5) est réalisée de manière polyédrique.

4. Fixation selon l'une quelconque des revendications 1 à 3,
**caractérisée en ce qu'**un alésage (14) est réalisé dans la fondation et/ou le socle (12) ou dans la plaque de monument (1), dans lequel est ancré un boulon ou une cheville (13) connecté (e) au cône extérieur (7).

5. Fixation selon la revendication 4,
**caractérisée en ce que** le boulon ou la cheville (13) est cimenté(e), collé(e) ou fixé(e) par écartement dans la fondation et/ou le socle (12) ou dans la plaque de monument (1).

6. Fixation selon la revendication 4,
**caractérisée en ce que** le boulon (13) est réalisé sous forme de boulon fileté qui est vissé dans une douille filetée (17) qui est cimentée ou ancrée fixement dans l'alésage (14) dans la fondation et/ou le socle (12) ou dans la plaque de monument (1).

7. Fixation selon l'une quelconque des revendications 1 à 6,
**caractérisée en ce que** le cône extérieur (7) à l'extrémité adjacente à la fondation et/ou au socle (12) est réalisé avec un alésage fileté (8) qui sert à visser une portion filetée (18) du boulon (13) s'étendant au moins au-delà de la fondation et/ou du socle (12) ou de la plaque de monument (1).

8. Fixation selon la revendication 7,
**caractérisée en ce qu'**une surface de clé (16), un alésage transversal ou une rainure est prévu(e) sur la surface du cône extérieur (7).

9. Fixation selon l'une quelconque des revendications 1 à 8,
**caractérisée en ce qu'**une pièce moulée (6') est réalisée avec le cône intérieur (5) et la pièce moulée (6') présente une surface se rétrécissant sous forme conique vers une extrémité (21) au moins essentiellement fermée.

10. Fixation selon l'une quelconque des revendications 1 à 9,
**caractérisée en ce qu'**une pièce moulée (6 ; 6') réalisée avec le cône intérieur (5) ou la pièce moulée réalisée avec le cône intérieur (5) est cimentée ou collée dans un alésage (2) qui s'étend depuis le côté inférieur de la plaque de monument (1) dans la plaque de monument (1) ou qui est pratiqué dans la fondation et/ou le socle (12).

11. Fixation selon la revendication 9 ou 10,
**caractérisée en ce que** la surface de la pièce moulée (6 ; 6') est profilée (4 ; 4').

12. Fixation selon l'une quelconque des revendications 9 à 11,
**caractérisée en ce que** la pièce moulée (6') présente au niveau d'une extrémité ouverte une bride d'ajustement (20).

13. Fixation selon l'une quelconque des revendications 1 à 8,
**caractérisée en ce que** le cône intérieur est réalisé sous forme d'alésage dans la plaque de monument (1).

14. Fixation selon l'une quelconque des revendications 1 à 13,
**caractérisée en ce qu'**entre le côté inférieur du cône extérieur (19) et la fondation et/ou le socle (12) est prévue une bride de répartition de charge (11).

15. Fixation selon l'une quelconque des revendications 1 à 14,
**caractérisée en ce que** le joint (10) entre la plaque de monument (1) et la fondation et/ou le socle (12) est fermé avec du mortier, de la colle ou du mastic.
